# EUROPÄISCHE PATENTSCHRIFT

(11) **EP 3 323 961 B1**
(45) Veröffentlichungstag und Bekanntmachung des Hinweises auf die Patenterteilung: **19.01.2022**
(21) Anmeldenummer: 17200809.6
(22) Anmeldetag: 09.11.2017
(51) Int. Cl.: E04G 17/065, E04G 17/075

(54) **SCHALUNGSELEMENT FÜR EINE BETONWANDSCHALUNG, MIT EINER VORRICHTUNG ZUR AUFNAHME EINES SCHALUNGSANKERS**
FORMWORK ELEMENT FOR A CONCRETE WALL FORMWORK, WITH A DEVICE FOR RECEIVING A FORMWORK ANCHOR
UN ÉLÉMENT DE COFFRAGE POUR UN COFFRAGE D'UNE PAROI EN BÉTON, AVEC UN DISPOSITIF DESTINÉ À RECEVOIR UN ANCRAGE DE COFFRAGE

(30) Priorität: 16.11.2016 AT 510402016
(43) Veröffentlichungstag der Anmeldung: 23.05.2018
(73) Patentinhaber: Ringer GmbH, 4844 Regau (AT)
(72) Erfinder: Pohn, Hermann, 4842 Zell am Pettenfirst (AT)
(74) Vertreter: Hübscher & Partner Patentanwälte GmbH

(56) Entgegenhaltungen:
- EP-A1- 2 816 175
- US-A- 3 965 542

## Beschreibung

Die Erfindung bezieht sich auf ein Schalungselement für eine Betonschalung, wobei das Schalungselement eine Vorrichtung zur Aufnahme eines Schalungsankers im Schalungselement umfasst, wobei die Vorrichtung einen schalungsfesten Einsatztopf, dessen einer Schalungsinnenseite des Schalungselements zugekehrter Topfboden eine Durchtrittsöffnung für ein Ankerende des Schalungsankers aufweist, eine Ankeraufnahme innerhalb des Einsatztopfs, in der das Ankerende verschiebefest haltbar ist, und eine Halterung für die gegenüber dem Topfboden begrenzt verschwenkbar abgestützte Ankeraufnahme umfasst.

Die einander gegenüberliegenden Schalungselemente einer Betonwandschalung werden durch Schalungsanker in einem die Wanddicke bestimmenden Abstand gehalten, wobei die Schalungsanker die Schalungselemente durchsetzen und auf der Außenseite der Schalungselemente in Muttergewinde von Ankeraufnahmen eingreifen, an denen sich die Schalungselemente unter einer Zugbelastung der Schalungsanker abstützen. Damit die Schalungselemente auf einer Wandseite nicht von außen zugänglich sein müssen, werden die diesen Schalungselementen zugehörigen Ankeraufnahmen in schalungsfesten Einsatztöpfen angeordnet, deren der Innenseite der Schalungselemente zugekehrter Topfboden vom Ankerende durchsetzt wird, sodass das mit einem Gewindeabschnitt versehene Ankerende durch den Topfboden bis auf Anschlag in das Muttergewinde der Ankeraufnahme eingeschraubt werden kann, die mithilfe einer Halterung drehfest gegenüber dem Einsatztopf gehalten wird. Zur Berücksichtigung von Fluchtungsfehlern bilden die Topfböden Kugelpfannen, in denen sich die Ankeraufnahmen begrenzt schwenkbar abstützen (EP 2 816 175 A1), und zwar mit kugelkalottenförmigen Abstützenden. Eine solche Ausführungsform hat gegenüber einer anderen bekannten Konstruktion (DE 10 2010 002 108 A1), bei der eine kugelkalottenförmige Abstützung für die Ankeraufnahme an der Außenseite des Schalungselements vorgesehen ist, den Vorteil, dass durch die Abstützung der Ankeraufnahme in Form eines Kugelgelenks eine sonst erforderliche Abdichtung der Ankerdurchführung durch das Schalungselement unter Umständen entfallen kann, wenn das Kugelgelenk dicht ausgebildet ist, was jedoch eine genaue Bearbeitung erfordert. Nachteilig ist daher der mit der kugelgelenkartigen Abstützung verbundene Konstruktionsaufwand.

Der Erfindung liegt somit die Aufgabe zugrunde, ein Schalungselement für eine Betonwandschalung, wobei das Schalungselement eine Vorrichtung zur Aufnahme eines Schalungsankers im Schalungselement umfasst, so auszugestalten, dass bei einfachen Konstruktionsvoraussetzungen eine zugfeste und dichte Verbindung des Schalungsankers mit dem Schalungselement von der Schalungsinnenseite her sichergestellt wird, und zwar unter Ausgleich allfälliger Fluchtungsfehler.

Die Erfindung löst die gestellte Aufgabe durch die Merkmale des Anspruchs 1.

Da der Dichtungsring das Ankerende dicht umschließt und zwischen dem Topfboden und dem Abstützende der Ankeraufnahme unter einer Vorspannung gehalten wird, kann in einfacher Weise ein dichter Durchtritt des Ankerendes durch das Schalungselement sichergestellt werden, ohne auf einen einfachen Ausgleich von Fluchtungsfehlern verzichten zu müssen. Die Lagerung der Ankeraufnahme in der mit dem Einsatztopf lösbar verbundenen Halterung mittels eines flexiblen Halterings, der in eine Ringnut des Abstützendes der Ankeraufnahme eingreift, erlaubt ja eine allseitige, begrenzte Verschwenkung der Ankeraufnahme innerhalb des Einsatztopfes um Schwenkachsen, die nahe dem Topfboden verlaufen und daher nur eine geringe Querverlagerung des Ankerendes innerhalb der Durchtrittsöffnung im Topfboden bedingen. Dies bedeutet, dass der Dichtungsring auch bei einer Verschwenkung der Ankeraufnahme einen dichten Durchtritt des Ankerendes durch den Topfboden gewährleisten kann, zumal die bei einem Verschwenken auf einer Seite der Schwenkachse auftretende Verringerung des Abstands zwischen Topfboden und Abstützende der Ankeraufnahme innerhalb des Dichtungsrings eine Materialverdrängung bedingt, die die Anlage des Dichtungsrings am Topfboden und am Abstützende der Ankeraufnahme im Bereich des sich vergrößernden Abstands unterstützt. In diesem Zusammenhang ist außerdem zu berücksichtigen, dass mit einer Zugbelastung des Schalungsankers die Vorspannung des Dichtungsrings erhöht und damit die Dichtwirkung verbessert wird. Die Ankeraufnahme stützt sich ja über den Dichtungsring am Topfboden ab.

Um die Verformung des Dichtungsrings beim Verschwenken der Ankeraufnahme innerhalb des Einsatztops im Sinne einer guten Dichtwirkung zu steuern, kann der Dichtungsring formschlüssig in eine stirnseitige Ausnehmung der Ankeraufnahme eingreifen und die Ausnehmung eine nach außen abfallende konische Stirnfläche aufweisen, was aufgrund dieser Formvorgaben durch das Abstützende der Ankeraufnahme ein vorteilhaftes Verformungsverhalten des Dichtrings erzwingt.

Die Halterung für die Ankeraufnahme im Einsatztopf kann unterschiedlich ausgeführt sein, weil es lediglich auf die Festlegung der Halterung gegenüber dem Einsatztopf ankommt. Besonders einfache Handhabungsbedingungen ergeben sich allerdings, wenn die Halterung mithilfe eines Bajonettverschlusses im Einsatztopf gehalten wird, weil in diesem Fall die Halterung zusammen mit der im Haltering gehaltenen Ankeraufnahme ohne Werkzeugeinsatz mit dem Einsatztopf verbunden und vom Einsatztopf auch wieder gelöst werden kann.

Eine Ankeraufnahme kann sowohl für das Verankern eines Ankerendes von der Innenseite des Schalungselements als auch für ein den Einsatztopf durchsetzendes Ankerende eingesetzt werden, das von der Außenseite des Schalungselements verschiebefest mit der Ankeraufnahme verbunden werden soll. Zur Ankerbefestigung von der Innenseite des Schalungselements her kann die Ankeraufnahme ein Muttergewinde für das mit einem Gewinde versehene Ankerende aufweisen, wobei das Abstützende der Ankeraufnahme einen mit dem Einsatztopf zusammenwirkenden Drehanschlag umfassen muss, damit beim Einschrauben des Ankerendes die das Muttergewinde bildende Ankeraufnahme nicht mitgedreht werden kann. Als Drehanschlag kann dabei wenigstens ein radial über die Ankeraufnahme vorstehender, mit Spiel in eine radiale Topfausnehmung eingreifender Anschlagstift vorgesehen sein. Das Bewegungsspiel eines solchen Anschlagstifts in der Topfausnehmung ist erforderlich, um ein allseitiges Verschwenken der Ankeraufnahme gegenüber dem Einsatztopf zuzulassen.

In der Zeichnung ist der Erfindungsgegenstand beispielsweise dargestellt. Es zeigen
- Fig. 1: eine erfindungsgemäße Betonwandschalung mit einer Vorrichtung zur Aufnahme eines Schalungsankers ausschnittsweise im Bereich eines Schalungsankers in einem schematischen Axialschnitt,
- Fig. 2: eine Vorrichtung in einem Axialschnitt in einem größeren Maßstab,
- Fig. 3: eine stirnseitige Ansicht der Vorrichtung in Richtung des Pfeils III der Fig. 1 in einem größeren Maßstab und
- Fig. 4: einen Schnitt nach der Linie IV-IV der Fig. 1, ebenfalls in einem größeren Maßstab.

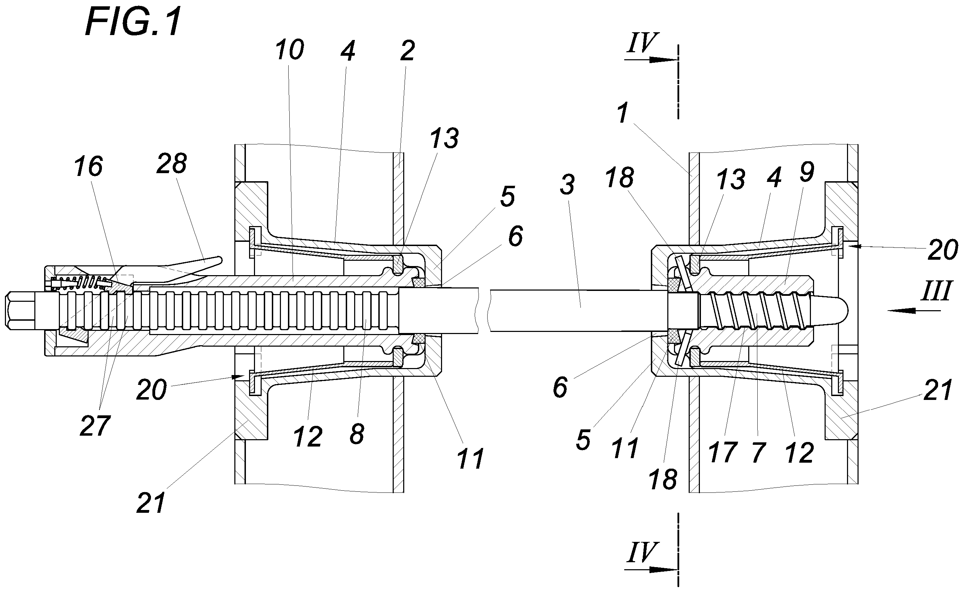

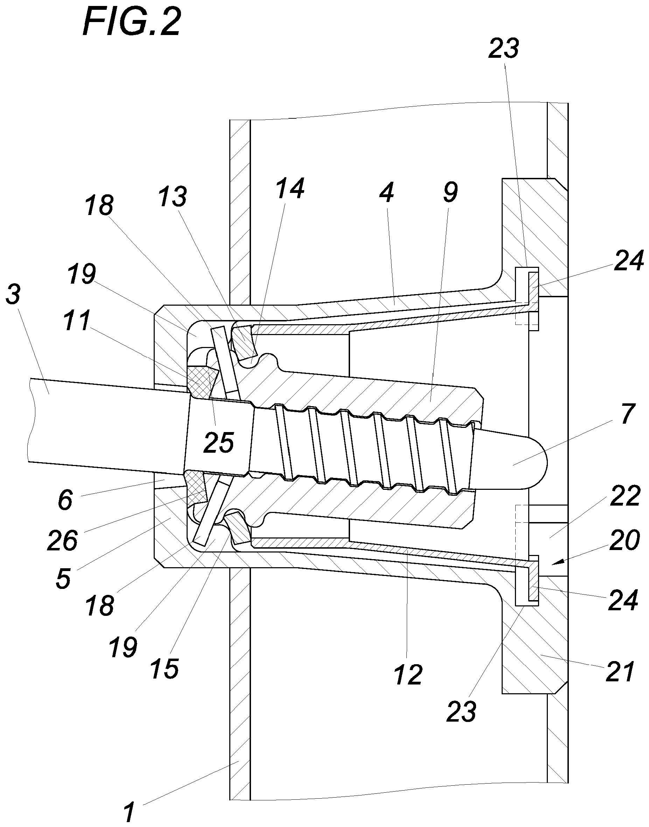

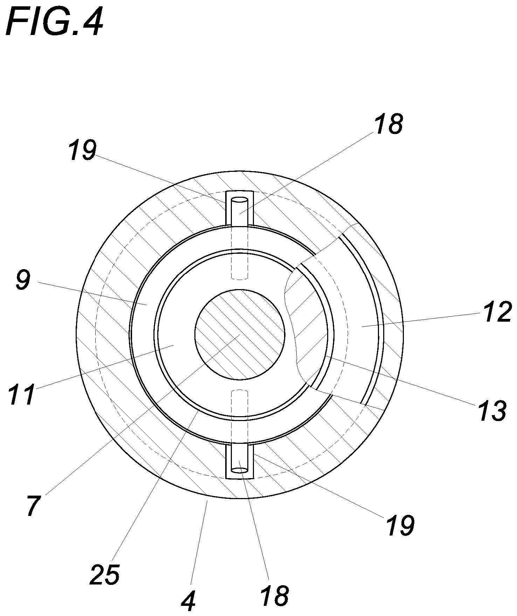

Die Betonwandschalung nach Fig. 1 weist einander mit Abstand gegenüberliegende Schalungselemente 1, 2 auf, die durch Schalungsanker 3 miteinander verbunden sind. Zu diesem Zweck sind die Schalungselemente 1, 2 mit Einsatztöpfen 4 versehen, deren Topfböden 5 Durchtrittsöffnungen 6 für die jeweiligen Ankerenden 7, 8 bilden. Diese Ankerenden 7, 8 sind verschiebefest mit Ankeraufnahmen 9, 10 verbunden, die sich unter Zwischenschaltung eines Dichtungsrings 11 am Topfboden 5 abstützen und innerhalb des Einsatztopfs 4 mittels einer Halterung 12 gehalten werden, und zwar durch einen flexible Halteringe 13, der in eine Ringnut 14 im Bereich des Abstützendes der Ankeraufnahmen 9, 10 eingreift und durch die Halterung 12 in Anlage an einer bodenseitigen Ringschulter 15 des Einsatztopfs 4 gehalten wird, wie dies insbesondere der Fig. 2 entnommen werden kann. Zum Unterschied zur Ankeraufnahme 10, in der das Ankerende 8 mit Hilfe eines Rastrings 16 in verschiedenen Axiallagen gegenüber der Ankeraufnahme 10 verschiebefest festgehalten wird, ist die Ankeraufnahme 9 mit einem Muttergewinde 17 für einen Gewindeabschnitt des Ankerendes 7 versehen, sodass der Schalungsanker 3 mit seinem Ankerende 7 von der Innenseite des Schalungselements 1 her durch die Durchtrittsöffnung 6 im Topfboden 5 hindurch in die Ankeraufnahme 9 bis auf Anschlag eingeschraubt werden kann. Um die Ankeraufnahme 9 drehfest gegenüber dem Einsatztopf 4 festzuhalten, bildet das Abstützende der Ankeraufnahme 9 einen Drehanschlag in Form von radial über das Abstützende vorstehenden Anschlagstiften 18, die mit Bewegungsspiel in radiale Topfausnehmungen 19 eingreifen, wie dies der Fig. 4 entnommen werden kann.

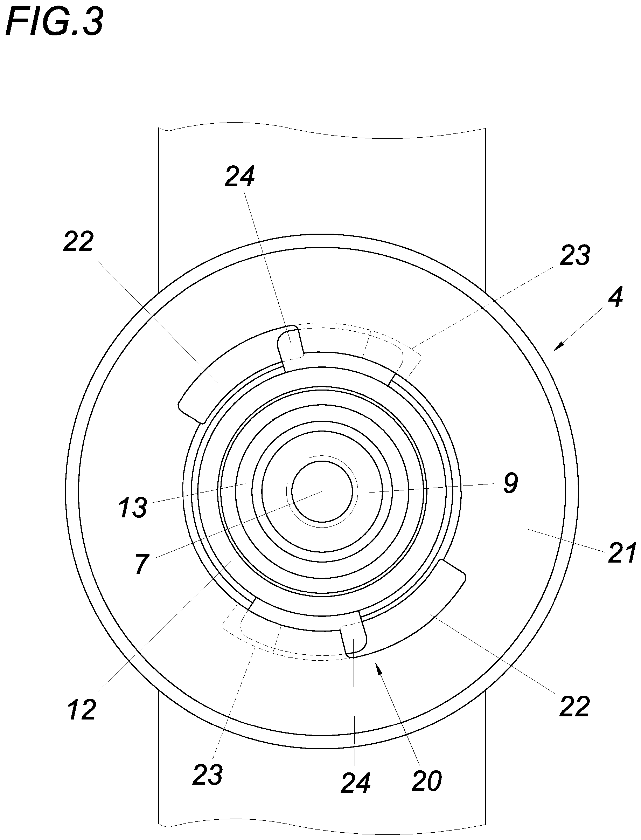

Die Halterung 12 für die Ankeraufnahmen 9, 10 können konstruktiv unterschiedlich ausgeführt sein, weil es ja nur darauf ankommt, diese Halterungen 12 gegenüber dem Einsatztopf 4 entsprechend festzulegen. Einfache Konstruktionsverhältnisse ergeben sich in diesem Zusammenhang, wenn die Halterungen 12 mit dem Einsatztopf 4 durch einen Bajonettverschluss 20 lösbar verbunden sind. Dieser Bajonettverschluss 20 weist gemäß den Fig. 2 und 3 in einem Topfflansch 21 vorgesehene Aussparungen 22 auf, von denen Aufnahmenuten 23 für Haltestege 24 an der hülsenartigen Halterung 12 ausgehen. Die Halterung 12 kann somit mit ihren Haltestegen 24 in die Aussparungen 22 der Topfflansche 21 axial eingesetzt und anschließend verdreht werden, bis die Haltestege 24 in die vorzugsweise mit einer Anlaufschräge versehenen Aufnahmenuten 23 eingreifen und dadurch die Halterung 12 gegen ein axiales Ausziehen aus dem Einsatztopf 4 festhalten.

Die Abstützung der Ankeraufnahmen 9, 10 am Topfboden 5 der Einsatztöpfe 4 über einen Dichtungsring 11, der sich dicht an das Ankerende 7 anlegt, erlaubt in einfacher Weise einen dichten Durchtritt des Ankerendes 7, 8 durch den Topfboden 5, weil der Dichtungsring 11 den Spalt zwischen dem Topfboden 5 und dem Abstützende der Ankeraufnahmen 9, 10 abdichtet, und zwar nicht nur bei einer koaxialen Anordnung von Einsatztopf 4 und Schalungsanker 3, sondern auch bei Fluchtungsfehlern, bei denen der Schaltungsanker 3 gegenüber dem Einsatztopf 4 geneigt verläuft, wie dies der Fig. 2 entnommen werden kann. Bei einer solchen Schwenklage des Schalungsankers 3 muss die Ankeraufnahme 9, 10 diese Schwenklage ebenfalls einnehmen können, was durch den flexiblen Haltering 13 sichergestellt wird. Wegen der axialen Vorspannung des Dichtungsrings 11 bleibt dieser Dichtungsring 11 auch bei einer einseitigen Erweiterung des Spalts zwischen dem Topfboden 5 und dem Abstützende der Ankeraufnahmen 9, 10 in dichter Anlage sowohl am Topfboden 5 als auch am Abstützende der Ankeraufnahmen 9, 10. Wie sich aus Fig. 2 ergibt, kann das Abstützende der Ankeraufnahmen 9, 10 mit einer stirnseitigen Ausnehmung 25 für den Dichtungsring 11 versehen sein, wobei diese Ausnehmung 25 eine nach außen abfallende konische Stirnfläche 26 aufweist. Die durch diese Ausformung der Ausnehmung 25 bedingte Verformung des Dichtungsrings 11 unterstützt die dichte Anlage des Dichtungsrings 11 einerseits am Topfboden 5 und anderseits am Abstützende der Ankeraufnahmen 9, 10 bei einem geneigten Verlauf des Schalungsankers 3.

Zur Verbindung der beiden Schalungselemente 1, 2 können die Schalungsanker 3 durch die Ankeraufnahme 10 des Schalungselements 2 hindurch in die Ankeraufnahme 9 des Schalungselements 1 bis auf Anschlag eingeschraubt werden. Der Rastring 16 in der Ankeraufnahme 10 ist zu diesem Zweck aus der gezeichneten Raststellung, in der der Rastring 16 mit Rastrippen in Ringnuten 27 des Ankerendes 8 eingreift, mittels eines Handhebels 28 in eine Losstellung verschwenkt werden, in der die Rastrippen den Durchtritt der Schalungsanker 3 durch die Ankeraufnahme freigeben. Mit der Wahl des jeweiligen Rasteingriffs des Rastrings 16 wird die wirksame Länge der Schalungsanker 3 vorgegeben und damit die jeweilige Wanddicke zwischen den Schalungselementen 1 und 2 bestimmt.

## Patentansprüche

1. Schalungselement (1, 2) für eine Betonwandschalung, wobei das Schalungselement eine Vorrichtung zur Aufnahme eines Schalungsankers (3) im Schalungselement (1,2) umfasst, wobei die Vorrichtung
- einen schalungsfesten Einsatztopf (4), dessen einer Schalungsinnenseite des Schalungselements (1, 2) zugekehrter Topfboden (5) eine Durchtrittsöffnung (6) für ein Ankerende (7, 8) des Schalungsankers (3) aufweist,
- eine Ankeraufnahme (9, 10) innerhalb des Einsatztopfs (4), in der das Ankerende (7, 8) verschiebefest haltbar ist, und
- eine Halterung (12) für die gegenüber dem Topfboden (5) begrenzt verschwenkbar abgestützte Ankeraufnahme (9, 10) umfasst,
**dadurch gekennzeichnet, dass**
die Ankeraufnahme (9, 10) ein Abstützende aufweist, das unter Zwischenlage eines Dichtungsrings (11) zum dichten Umschließen des Ankerendes (7, 8) am Topfboden (5) abgestützt ist und im Bereich des Abstützendes eine Ringnut (14) bildet, in die ein flexibler Haltering (13) der Halterung (12) eingreift.

2. Schalungselement nach Anspruch 1, **dadurch gekennzeichnet, dass** der Dichtungsring (11) formschlüssig in eine stirnseitige Ausnehmung (25) der Ankeraufnahme (9, 10) eingreift und dass die Ausnehmung (25) eine nach außen abfallende konische Stirnfläche (26) aufweist.

3. Schalungselement nach Anspruch 1 oder 2, **dadurch gekennzeichnet, dass** die Halterung (12) für die Ankeraufnahme (9, 10) mithilfe eines Bajonettverschlusses (20) im Einsatztopf (4) gehalten ist.

4. Schalungselement nach einem der Ansprüche 1 bis 3, **dadurch gekennzeichnet, dass** die Ankeraufnahme (9) ein Muttergewinde (17) für das mit einem Gewinde versehene Ankerende (7) aufweist und dass das Abstützende der Ankeraufnahme (9) einen mit dem Einsatztopf (4) zusammenwirkenden Drehanschlag umfasst.

5. Schalungselement nach Anspruch 4, **dadurch gekennzeichnet, dass** der Drehanschlag der Ankeraufnahme (9, 10) wenigstens einen radial über die Ankeraufnahme (9, 10) vorstehenden, mit Spiel in eine radiale Topfausnehmung (19) eingreifenden Anschlagstift (18) umfasst.

## Claims

1. Formwork element (1, 2) for a concrete wall formwork, wherein the formwork element comprises a device for receiving a formwork anchor (3) in the formwork element (1, 2), wherein the device comprises
- a formwork-proof insert pot (4), the pot base (5) of which, facing a formwork inner side of the formwork element (1, 2), has a passage opening (6) for an anchor end (7, 8) of the formwork anchor (3),
- an anchor receptacle (9, 10) within the insert pot (4), in which the anchor end (7, 8) can be held in a non-displaceable manner, and
- a holder (12) for the anchor receptacle (9, 10) which is supported so as to be pivotable to a limited extent with respect to the pot base (5),
**characterised in that** the anchor receptacle (9, 10) has a supporting end which is supported on the pot base (5) with interpositioning of a sealing ring (11) for tightly surrounding the anchor end (7, 8) and forms in the region of the supporting end an annular groove (14), into which a flexible holding ring (13) of the holder (12) engages.

2. Formwork element as claimed in claim 1, **characterised in that** the sealing ring (11) engages in a form-fitting manner into an end-side recess (25) of the anchor receptacle (9, 10) and **in that** the recess (25) has an outwardly sloping conical end surface (26).

3. Formwork element as claimed in claim 1 or 2, **characterised in that** the holder (12) for the anchor receptacle (9, 10) is held in the insert pot (4) by means of a bayonet lock (20).

4. Formwork element as claimed in any one of claims 1 to 3, **characterised in that** the anchor receptacle (9) has a nut thread (17) for the threaded anchor end (7) and **in that** the supporting end of the anchor receptacle (9) comprises a rotation stop which cooperates with the insert pot (4).

5. Formwork element as claimed in claim 4, **characterised in that** the rotation stop of the anchor receptacle (9, 10) comprises at least one stop pin (18) which protrudes radially over the anchor receptacle (9, 10) and engages with clearance into a radial pot recess (19).

## Revendications

1. Elément de coffrage (1, 2) pour un coffrage de mur en béton, l'élément de coffrage comprenant un dispositif pour recevoir un ancrage de coffrage (3) dans l'élément de coffrage (1, 2), dans lequel le dispositif
- comprend un pot d'insertion (4) fixe par rapport au coffrage dont le fond de pot (5) faisant face à une face interne de coffrage de l'élément de coffrage (1, 2) présente un orifice de passage (6) pour une extrémité d'ancrage (7, 8) de l'ancrage de coffrage (3),
- un logement d'ancrage (9, 10) à l'intérieur du pot d'insertion (4), dans lequel l'extrémité d'ancrage (7, 8) peut être maintenue immobile, et
- un support (12) pour le logement d'ancrage (9, 10) appuyé de manière à pouvoir pivoter de façon limitée par rapport au fond de pot (5),
**caractérisé en ce que**
le logement d'ancrage (9, 10) présente une extrémité d'appui qui est appuyée avec interposition d'une bague d'étanchéité (11) pour entourer de façon étanche l'extrémité d'ancrage (7, 8) sur le fond de pot (5) et forme dans la région de l'extrémité d'appui une rainure annulaire (14) dans laquelle une bague de support (13) du support (12) s'engage.

2. Elément de coffrage selon la revendication 1, **caractérisé en ce que** la bague d'étanchéité (11) s'engage par concordance des formes dans un évidement frontal (25) du logement d'ancrage (9, 10) et que l'évidement (25) présente une face frontale conique (26) inclinée vers l'extérieur.

3. Elément de coffrage selon la revendication 1 ou 2, **caractérisé en ce que** le support (12) du logement d'ancrage (9, 10) est maintenu dans le pot d'insertion (4) au moyen d'une fermeture à baïonnette (20).

4. Elément de coffrage selon une des revendications 1 à 3, **caractérisé en ce que** le logement d'ancrage (9) présente un filetage femelle (17) pour l'extrémité d'ancrage (7) dotée d'un filetage et que l'extrémité d'appui du logement d'ancrage (9) comprend une butée de rotation collaborant avec le pot d'insertion (4).

5. Elément de coffrage selon la revendication 4, **caractérisé en ce que** la butée de rotation du logement d'ancrage (9, 10) comprend au moins une goupille de butée (18) saillant radialement au-delà du logement d'ancrage (9, 10) et s'engageant avec jeu dans un logement de pot radial (19).
